# EUROPEAN PATENT SPECIFICATION

(11) **EP 2 775 163 B1**
(45) Date of publication and mention of the grant of the patent: **27.04.2016**
(21) Application number: 14157890.6
(22) Date of filing: 05.03.2014
(51) Int. Cl.: F16F 9/34, F16F 9/516, F16F 9/19, F16F 9/348

(54) **Fluid-type shock absorber, particularly for doors of electrical household appliances**
Flüssigkeitsstoßdämpfer, insbesondere für Türen von elektrischen Haushaltsgeräten
Amortisseur de type fluide, en particulier pour des portes d'appareils électroménagers

(30) Priority: 07.03.2013 IT MI20130344
(43) Date of publication of application: 10.09.2014
(73) Proprietor: Brera Cerniere S.R.L., 20121 Milano (IT)
(72) Inventor: Brera, Roberto Piero, 20123 MILANO (IT)
(74) Representative: Vanosi, Adelio Valeriano

(56) References cited:
- WO-A2-2008/000460
- GB-A- 2 207 977
- JP-A- 2012 255 467
- US-A- 3 957 140

## Description

The present invention relates to a fluid-type shock absorber, particularly for doors of electrical household appliances such as ovens, dishwashers or the like or for furniture components such as cabinet doors or drawers, with great simplicity of production.

Fluid-type shock absorbers are known which are used in particular for damping the closing movement of cabinet doors or drawers of items of furniture, but also for doors of electrical household appliances like ovens and dishwashers.

Some conventional types of shock absorbers as disclosed in the WO 2008000460 comprise a body or housing that is substantially cylindrical in shape and in which is defined a first cylindrical chamber that accommodates, slideably, a piston the stem of which protrudes from an axial end of the housing and is connectable to the item that it is to damp. The piston axially delimits a part of the first chamber in which a fluid is contained, and such part of the first chamber is connected, through holes of calibrated diameter, with a second chamber that, in some types of shock absorbers, is arranged around the first chamber and, in other types of shock absorbers, extends partially around the first chamber and partially inside the housing at the other end from the first chamber with respect to the piston. In the second chamber there is an elastically deformable element, such as for example a sponge, or the second chamber is delimited by an elastically deformable element, such as for example a membrane, so that the useful volume of the second chamber can vary in order to exchange fluid with the first chamber.

Other types of shock absorbers comprise a shock absorber body that is substantially cylindrical in shape and in which is defined a cylindrical chamber that coaxially accommodates, slideably, a piston that divides such chamber into two chambers, which are arranged on mutually opposite sides with respect to the piston. These two parts of the chamber are connected to each other by way of a calibrated connection passage that, generally, is defined in the shock absorber body.

In essence, in these types of shock absorbers, the axial movement of the piston with respect to the housing brings about a transfer of fluid from one chamber or part of chamber to another chamber or part of chamber through one or more calibrated holes or passages. The passage of the fluid through the calibrated holes or passages dissipates kinetic energy, thus actuating the braking of the piston. The braking of the axial movement of the piston in one direction is used to actuate the damping of the item that is connected to the stem of the piston, while the axial movement of the piston in the opposite direction, or reset movement, in order to prevent an unwanted damping effect on the item that is connected to the stem of the piston, is assisted or induced completely by a reset spring that is interposed between the piston and the housing.

The design and production of these shock absorbers, in particular in the field of furniture and electrical household appliances, where the space occupation of shock absorbers needs to be contained, often encounter problems that are not easy to solve.

One of the problems that is found in these types of shock absorbers is the difficulty of reconciling the requirement of having reduced encumbrances with the requirement of having an adequate damping force.

Another problem is the difficulty of making the calibrated holes or ducts in the shock absorber body. This production difficulty inevitably raises the production costs of these shock absorbers.

An additional problem is the difficulty of obtaining, in a shock absorber of contained size, adequate mechanical strength to enable the shock absorber to withstand impulse stresses, particularly for liquid-type shock absorbers.

Yet another problem is the time required for resetting the shock absorber by the action of the reset spring. In fact, owing to the fact that the connection between the chambers or the parts of chambers is achieved by way of calibrated holes or passages, the cross-section of which for the passage of the fluid needs to be small enough to obtain a good damping effect, in order to reset rapidly it is necessary to use a reset spring that is capable of developing a strong force. This constitutes, generally, a problem in that the force of the reset spring is a force to be defeated during the actuation of the item that has to be damped.

The aim of the present invention is to solve the above mentioned problems, by providing a fluid-type shock absorber, particularly for doors of electrical household appliances such as ovens, dishwashers or the like or for furniture components such as cabinet doors or drawers, which is capable of developing a strong braking force with a contained space occupation and which is simple to make.

Within this aim, an object of the invention is to provide a fluid-type shock absorber that has a reset movement that is sufficiently rapid without necessarily requiring the application of a strong force.

Another object of the invention is to provide a fluid-type shock absorber that can be produced at very low cost.

A further object of the invention is to provide a fluid-type shock absorber that ensures a long lifetime and a high reliability of operation.

This aim and these and other objects which will become better apparent hereinafter, are achieved by a fluid-type shock absorber, particularly for doors of electrical household appliances such as ovens, dishwashers or the like or for furniture components such as cabinet doors or drawers, which comprises a shock absorber body that has internally a substantially cylindrical chamber that accommodates coaxially a piston provided with a stem that protrudes from at least one axial end of said chamber; said piston dividing said chamber into two parts arranged on mutually opposite sides with respect to said piston along the axis of said chamber and containing a fluid; said piston being accommodated so that it can slide axially within said chamber; at least one duct being provided for connecting said two parts of the chamber in order to allow the transit of the fluid from one part to the other of said chamber for the axial sliding of said piston with respect to said shock absorber body, characterized in that said at least one connecting duct is defined in said piston and has a calibrated portion thereof that is defined on a first end face of said piston, means being provided for varying the passage section of said connecting duct available for the fluid; said means for varying the passage section of said connecting duct, depending on the direction of axial sliding of said piston in said chamber, being engageable or disengageable with said first end face of the piston in order to channel the transit of the fluid along said calibrated portion or in order to also allow the transit of the fluid outside said calibrated portion.

Further characteristics and advantages of the invention will become better apparent from the description of a preferred, but not exclusive, embodiment of the shock absorber according to the invention, which is illustrated by way of non-limiting example in the accompanying drawings wherein:

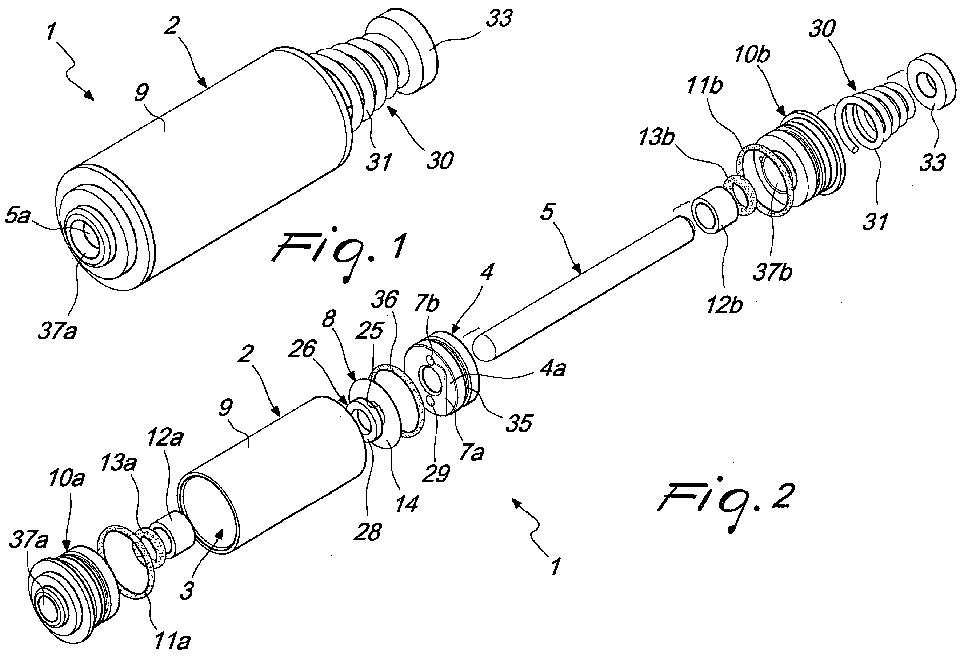

Figure 1 is a perspective view of the shock absorber according to the invention;
Figure 2 is an exploded perspective view of the shock absorber according to the invention;

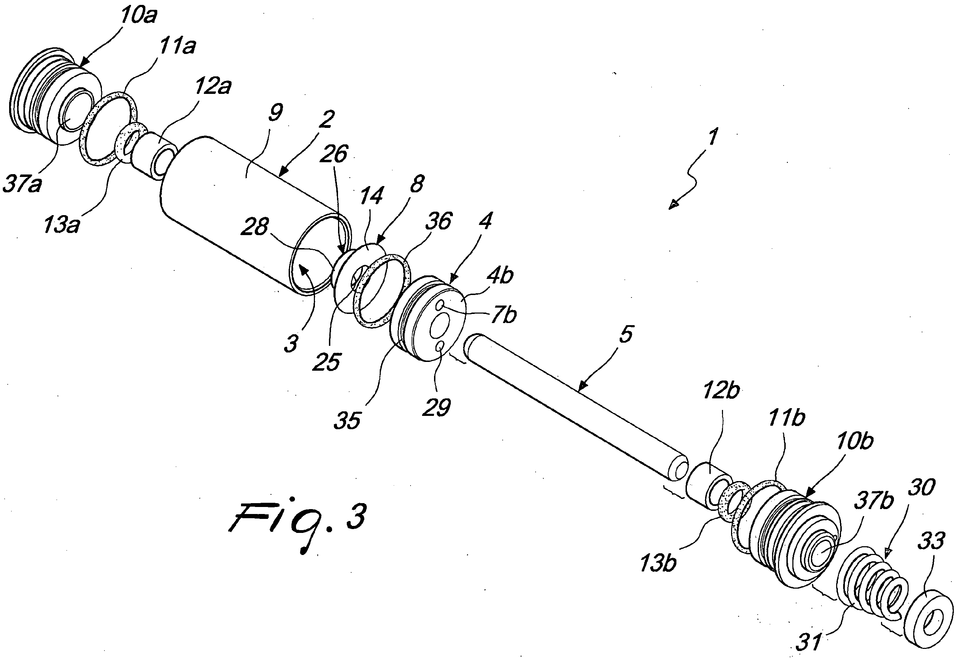

Figure 3 is another exploded perspective view of the shock absorber according to the invention, but seen from a different angle with respect to Figure 2;
Figure 4 is an axial cross-sectional view of the shock absorber according to the invention in the inactive condition;
Figure 5 is an axial cross-sectional view of the shock absorber according to the invention in an active condition;
Figure 6 is an axial cross-sectional view of the shock absorber according to the invention in a different active condition from that shown in Figure 5.

With reference to the figures, the shock absorber according to the invention, which is generally designated by the reference numeral 1, comprises a shock absorber body 2 in which is defined a substantially cylindrical chamber 3 that accommodates, coaxially, a piston 4 that is provided with a stem 5 that protrudes at least from one axial end of the chamber 3.

The piston 4 divides the chamber 3 into two parts 3a and 3b which are arranged on mutually opposite sides with respect to the piston 4 along the axis 6 of the chamber 3 and which are occupied by a fluid, preferably a liquid.

The shock absorber in question has at least one duct 7 connecting the two parts 3a, 3b of the chamber 3 so as to enable the passage of the fluid from one part to the other of the chamber 3 and therefore in order to allow the axial sliding of the piston 4 with respect to the shock absorber body 2.

According to the invention, the connecting duct 7 is defined in the piston 4 and has a calibrated portion 7a thereof which is defined on an end face 4a of the piston 4 which, for clarity, will be referred to hereinafter as "first end face 4a". The shock absorber according to the invention is provided with means 8 of varying the passage section of the connecting duct 7 that is available for the transit of the fluid. The means 8 of varying the passage section of the connecting duct 7, depending on the direction of axial sliding of the piston 4 in the chamber 3, are engageable or disengageable with the first end face 4a of the piston 4 so as to channel the transit of the fluid along the calibrated portion 7a or so as to also allow the transit of the fluid outside such calibrated portion 7a, as will be better described hereinafter.

More specifically, the shock absorber body 2 is substantially cylindrical and can be made extremely simply, it being composed of a hollow cylinder, which can be constituted simply by a tube that is closed, at its axial ends, by caps or headers 10a, 10b. The headers 10a, 10b are inserted with a cylindrical portion thereof into the axial ends of the hollow cylinder 9 and, interposed between these cylindrical portions and the inner lateral surface of the hollow cylinder 9, are sealing gaskets 11a, 11b, such as for example O-rings.

Defined on the lateral surface of the piston 4, a circumferential groove 35 is defined that accommodates a gasket seal 36, for example an O-ring, which engages with the lateral surface of the chamber 3, i.e. with the inner lateral surface of the hollow cylinder 9.

Preferably, the piston 4 is fixed, for example by way of a forced fit, or by way of welding, gluing or other fixing technique, in an intermediate region of the longitudinal extension of the stem 5 which, in this manner, protrudes coaxially from both of the end faces 4a, 4b of the piston 4, thus protruding from both of the axial ends of the chamber 3, passing through holes 37a, 37b that pass centrally through the headers 10a, 10b.

Arranged inside each one of the headers 10a, 10b, a sliding sleeve 12a, 12b is provided that is passed through, slideably, by the corresponding portion 5a, 5b of the stem 5. Arranged inside each one of the headers 10a, 10b are sealing gaskets 13a, 13b, such as for example O-rings, which engage with the corresponding portion 5a, 5b of the stem 5.

Preferably, the connecting duct 7 comprises: a main portion 7b, which passes through the piston 4 from the first end face 4a to the opposite end face or "second end face" 4b, and the calibrated portion 7a, which extends from the end of the main portion 7b that is defined on the first end face 4a of the piston 4. The calibrated portion 7a is constituted by a groove that is recessed in the flat surface of the first end face 4a of the piston 4.

The means 8 of varying the passage section of the connecting duct 7 comprise a lamina 14 that faces the first end face 4a of the piston 4 and which can move axially with respect to the piston 4 in order to pass from an active position, in which it adheres to the first end face 4a of the piston 4, thus closing the top of the groove that constitutes the calibrated portion 7a, to an inactive position, in which it is spaced from the first end face 4a of the piston 4, and vice versa.

The main portion 7b of the connecting duct 7 has a cross-section for the passage of fluid that is appreciably larger than the cross-section for the passage of fluid of the calibrated portion 7a, obviously when this portion is delimited by the lamina 14 in the active position.

Preferably, the lamina 14 has a substantially disk-like shape and is arranged coaxially to the piston 4. The calibrated portion 7a of the connecting duct 7 has one of its ends arranged in a region of the first end face 4a of the piston 4 that cannot be engaged by the lamina 14, so that the calibrated portion 7a of the connecting duct 7 is always connected with the part 3a of the chamber 3, hereinafter referred to as the "first part", which is delimited by the first end face 4a of the piston 4, even when the lamina 14 is in the active position and that is to say against the first end face 4a of the piston 4.

Even more preferably, the lamina 14 is passed through centrally by a hole 25 that is coupled, slideably, with the portion 5a of the stem 5 that protrudes from the first end face 4a of the piston 4, so as to pass from the active position to the inactive position, referred to earlier, by sliding along such portion 5a of the stem 5, and means 26 are provided of delimiting the sliding of the lamina 14 away from the first end face 4a of the piston 4.

The means 26 of delimiting the sliding of the lamina 14 are preferably constituted by an axial shoulder 27, which is arranged along the portion 5a of the stem 5 that extends from the first end face 4a of the piston 4 and is defined by a ring 28 that is fitted, fixedly, over such portion 5a of the stem 5.

The lamina 14 has a diameter that is smaller than the diameter of the piston 4 so that there is an annulus region of the first end face 4a of the piston 4 which is in excess with respect to the lamina 14 and which thus is not covered by the lamina 14 when this lamina is in the active position and that is to say against the first end face 4a of the piston 4. The calibrated portion 7a of the connecting duct 7 has one of its ends arranged in this region of the first end face 4a so that the calibrated portion 7a is constantly connected with the first part 3 a of the chamber 3.

Advantageously, an auxiliary connecting duct 29 is provided that passes through the piston 4 from one end face to the other. The end of the auxiliary connecting duct 29 that is defined on the first end face 4a of the piston 4 is in a position that is such as to be completely blocked by the lamina 14 when this lamina is in the active position.

Conveniently, reset means 30 are provided which are adapted to keep or move the piston 4 at the axial end of the chamber 3 that faces the second end face 4b of the piston 4.

The reset means 30 are preferably constituted by a reset spring 31 that is fitted on a portion of the stem 5 that protrudes from the chamber 3 and which is interposed between an axial shoulder 32 that is defined along the stem 5, for example by way of a ring 33 that is fitted over and fixed around the stem 5, and an axial shoulder 34 that is defined by the shock absorber body 2.

Preferably, the groove that constitutes the calibrated portion 7a of the connecting duct 7 is obtained by way of a coined region that is executed on the first end face 4a of the piston 4.

Operation of the shock absorber according to the invention is the following.

The shock absorber is fitted so as to be in contact with the item to be damped by way of the end of the portion 5b of stem 5 that extends from the second end face 4b of the piston 4 and that is to say, in the embodiment shown, the end of the portion 5b of stem 5 around which the reset spring 31 is arranged.

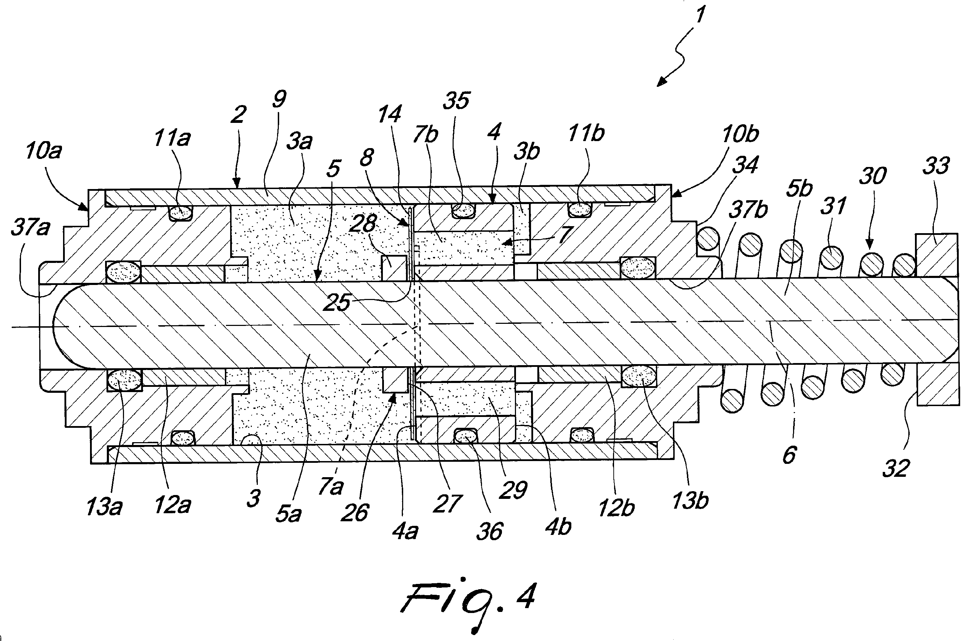

In the inactive condition, the piston 4 is kept with its second end face 4b against the header 10b by the action of the reset spring 31, as illustrated in Figure 4.

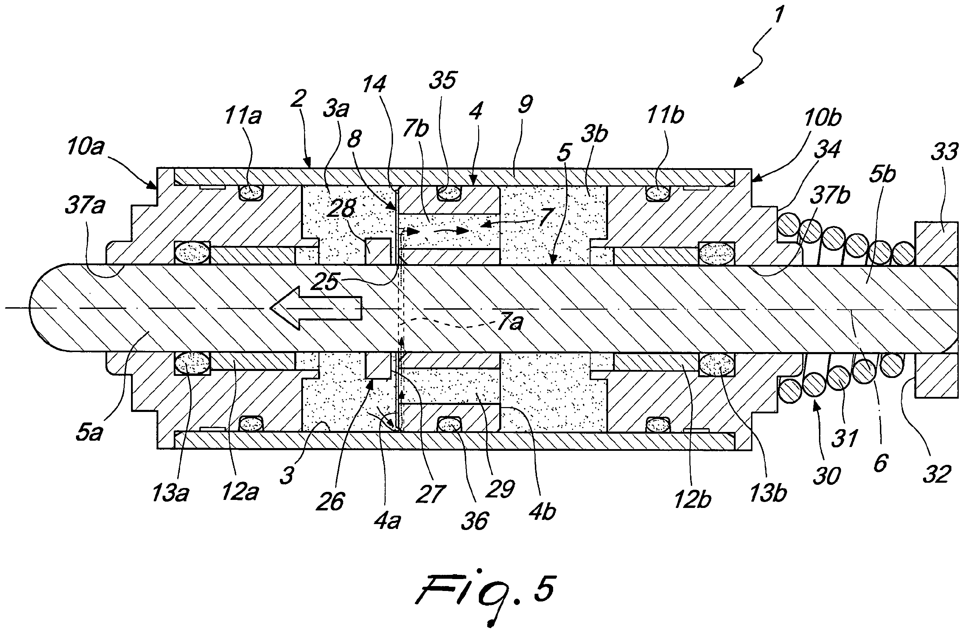

When the item to be damped acts on the stem 5 so as to cause the movement of the piston 4 toward the opposite header 10a, the pressure inside the first part 3a of the chamber 3 increases, while the pressure inside the part 3b of the chamber 3, which is delimited by the second end face 4b of the piston 4 and which hereinafter is referred to as the "second part", decreases. This difference in pressure causes the transition of the lamina 14 to the active position, and that is to say its axial movement along the stem 5 with consequent engagement against the first end face 4a of the piston 4, as illustrated in Figure 5.

In this condition, the auxiliary connecting duct 29 is closed completely by the lamina 14 which also covers the top of the groove that constitutes the calibrated portion 7a of the connecting duct 7. In this manner, the connecting duct 7 is connected with the first part 3a of the chamber 3 exclusively through the calibrated portion 7a. The fluid, by way of the increase in pressure generated by the movement of the piston 4, is forced to pass from the first part 3a of the chamber 3 to the second part 3b of the chamber 3, by passing through the calibrated portion 7a of the connecting duct 7. The transit of the fluid through the calibrated portion 7a of the connecting duct 7 dissipates kinetic energy, thus actuating the braking of the piston 4 and thus of the item that is connected to its stem 5.

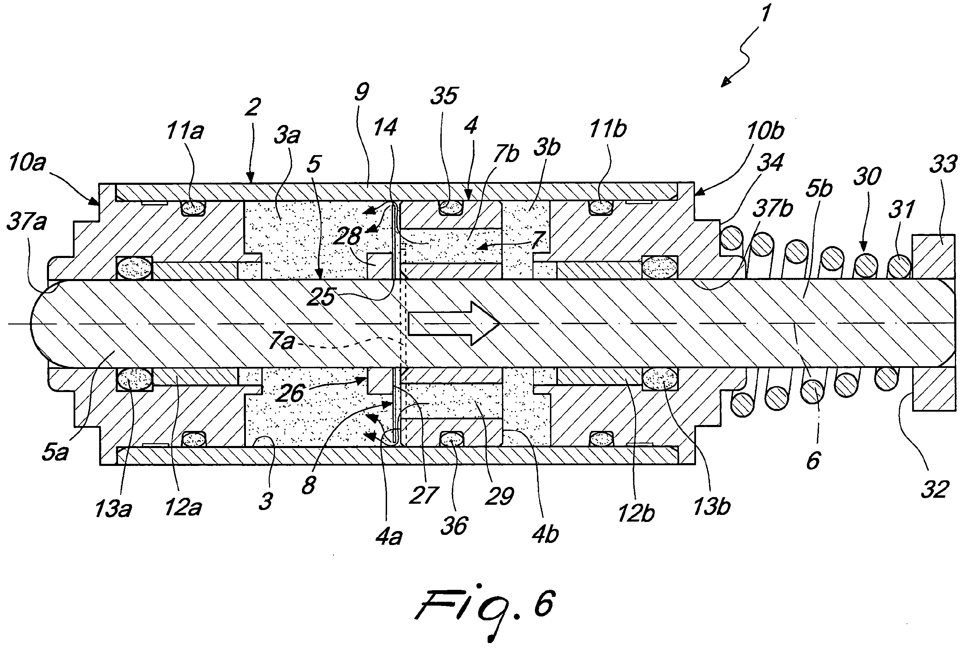

When the action on the piston 4 that caused its axial movement along the chamber 3 toward the header 10a ceases, the elastic reaction of the reset spring 31, which had been compressed by the previous axial movement of the piston 4, exerts a force on the stem 5 that causes the axial movement of the piston 4 in the direction of the header 10b. This force causes an increase in pressure in the second part 3b of the chamber 3 and a decrease in pressure inside the first part 3a of the chamber 3. This difference in pressure, as illustrated in Figure 6, causes the transition of the lamina 14 to the inactive position and that is to say its movement away from the first end face 4a of the piston 4, and this movement away is delimited by the presence of the axial shoulder 27 defined by the ring 28. The transition of the lamina 14 to the inactive position and that is to say its separation from the first end face 4a of the piston 4 causes the opening of the top of the groove that constitutes the calibrated portion 7a of the connecting duct 7 and frees the ends of the main portion 7b of the connecting duct 7 and of the auxiliary duct 29 which are defined in the first end face 4a of the piston 4. In this manner, the fluid contained in the second part 3b of the chamber 3, which is under greater pressure, can flow into the first part 3a of the chamber 3 since it has a passage section available that is considerably larger than that of the calibrated portion 7a alone. In fact, the fluid can pass through the entire space that is created between the lamina 14 and the first end face 4a of the piston 4. In this manner, the movement to reset the shock absorber can be done rapidly even when using a reset spring 31 of contained size and reduced rigidity.

It should be noted that any excess stress, even if impulsive, on the piston 4, while this is moving toward the header 10a, can be withstood by the shock absorber according to the invention in that such stresses do not cause a sticking of the piston 4, but instead increase the speed of transit of the fluid through the calibrated portion 7a of the connecting duct 7.

In practice it has been found that the shock absorber according to the invention fully achieves the set aim in that the particular implementation of the calibrated portion of the passage duct on one of the end faces of the piston considerably simplifies the production of the entire shock absorber and makes it possible to obtain a high damping force even with shock absorbers of contained size.

Another advantage of the shock absorber according to the invention is that it offers a reduced reset time although it uses a reset spring of contained size and power.

The shock absorber, thus conceived, is susceptible of numerous modifications and variations, all of which are within the scope of the appended claims; thus, for example, according to the damping effect desired and according to the requirements for use, there can be multiple connecting ducts 7 and multiple calibrated portions 7a.

Moreover, all details may be substituted by other, technically equivalent elements.

In practice the materials employed, provided they are compatible with the specific use, and the dimensions, may be any according to requirements and to the state of the art.

The disclosures in Italian Patent Application No. MI2013A000344 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A fluid-type shock absorber, particularly for doors of electrical household appliances such as ovens, dishwashers or the like or for furniture components such as cabinet doors or drawers, which comprises a shock absorber body (2) that has internally a substantially cylindrical chamber (3) that accommodates coaxially a piston (4) provided with a stem (5) that protrudes from at least one axial end of said chamber (3); said piston (4) dividing said chamber (3) into two parts (3a, 3b) arranged on mutually opposite sides with respect to said piston (4) along the axis (6) of said chamber (3) and containing a fluid; said piston (4) being accommodated so that it can slide axially within said chamber (3); at least one duct (7) being provided for connecting said two parts (3a, 3b) of the chamber (3) in order to allow the transit of the fluid from one part to the other of said chamber (3) for the axial sliding of said piston (4) with respect to said shock absorber body (2), said at least one connecting duct (7) being defined in said piston (4) and has a calibrated portion (7a) thereof that is defined on a first end face (4a) of said piston (4), means (8) being provided for varying the passage section of said connecting duct (7) available for the fluid; said means (8) for varying the passage section of said connecting duct (7), depending on the direction of axial sliding of said piston (4) in said chamber (3), being engageable or disengageable with said first end face (4a) of the piston (4) in order to channel the transit of the fluid along said calibrated portion (7a) or in order to also allow the transit of the fluid outside said calibrated portion (7a), **characterized in that** said connecting duct (7) comprises: a main portion (7b), which passes through said piston (4) from said first end face (4a) to its opposite end face or second end face (4b), and said calibrated portion (7a), which protrudes from the end of said main portion (7b) that is defined on said first end face (4a) of the piston (4); said calibrated portion (7a) being constituted by a groove that is recessed in said first end face (4a) of the piston (4); said means (8) for varying the passage section of said connecting duct (7) comprising a lamina (14) that faces said first end face (4a) of the piston (4) and can move axially with respect to said piston (4) from an active position, in which it adheres to said first end face (4a) of the piston (4), closing the top of said groove that constitutes said calibrated portion (7a), to an inactive position, in which it is spaced from said first end face (4a) of the piston (4), and vice versa; said calibrated portion (7a) of the connecting duct (7), with said lamina (14) in said active position, being connected to the part of said chamber (3) that is delimited by said first end face (4a) of the piston (4) and having a passage section for the fluid that is smaller than that of said main portion (7b).

2. The shock absorber according to claim 1, **characterized in that** said lamina (14) has a substantially disk-like shape and is arranged coaxially to said piston (4), said calibrated portion (7a) of the connecting duct (7) having an end thereof that is arranged in a region of said first end face (4a) of the piston (4) that cannot be engaged by said lamina (14).

3. The shock absorber according to one or more of the preceding claims, **characterized in that** said piston (4) is fixed at an intermediate region of said stem (5); said stem (5) protruding from both of the axial ends of said chamber (3).

4. The shock absorber according to one or more of the preceding claims, **characterized in that** said lamina (14) is crossed by a hole (25) that is coupled slideably with a portion of said stem (5) that protrudes from said first end face (4a) of the piston (4), means (26) being provided for delimiting a sliding of said lamina (14) away from said first end face (4a) of the piston (4).

5. The shock absorber according to one or more of the preceding claims, **characterized in that** said means for delimiting the sliding (26) of said lamina (14) comprise an axial shoulder (27) that is defined, along the portion (5a) of said stem (5) that protrudes from said first end face (4a) of the piston (4), at a preset distance from said first end face (4a) of the piston (4).

6. The shock absorber according to one or more of the preceding claims, **characterized in that** said lamina (14) has a smaller diameter than that of said piston (4), said calibrated portion (7a) of the connecting duct (7) having an end thereof in a region of said first end face (4a) of the piston (4) that is in excess with respect to said lamina (14).

7. The shock absorber according to one or more of the preceding claims, **characterized in that** it comprises an auxiliary connecting duct (29) that passes through said piston (4) from one end face to the other, an end of said auxiliary connecting duct (29) defined in said first end face (4a) of said piston (4) being blocked by said lamina (14) in said active position.

8. The shock absorber according to one or more of the preceding claims, **characterized in that** it comprises reset means (30) adapted to keep or move said piston (4) at the axial end of said chamber (3) that faces said second end face (4b) of the piston (4).

9. The shock absorber according to claim 8 **characterized in that** said reset means (30) comprise a reset spring (31) that is fitted on a portion (5b) of said stem (5) that protrudes from said chamber (3) and is interposed between an axial shoulder (32) that is defined along said stem (5) and an axial shoulder (34) that is defined by said shock absorber body (2).

10. The shock absorber according to one or more of the preceding claims, **characterized in that** said calibrated portion (7a) of the connecting duct (7) is defined by a coined region of said first end face (4a) of the piston (4).

11. The shock absorber according to one or more of the preceding claims, **characterized in that** said fluid is constituted by a liquid.

## Patentansprüche

1. Flüssigkeitsstoßdämpfer, insbesondere für Türen elektrischer Haushaltsgeräte wie Öfen, Geschirrspüler oder Ähnlichem oder für Möbelbestandteile wie Schranktüren oder Schubladen, der einen Stoßdämpferkörper (2) umfasst, der im Innern eine im Wesentlichen zylindrische Kammer (3) aufweist, die einen Kolben (4) koaxial beherbergt, der mit einer Stange (5) ausgestattet ist, der von mindestens einem axialen Ende der Kammer (3) hervorsteht; wobei der Kolben (4) die Kammer in zwei Teile (3a, 3b) teilt, die auf gegenseitig gegenüberliegenden Seiten in Bezug auf den Kolben (4) entlang der Achse (6) der Kammer (3) angeordnet sind und ein Fluid enthalten; wobei der Kolben (4) so untergebracht ist, dass er axial in der Kammer (3) gleiten kann; wobei mindestens ein Kanal (7) zum Verbinden der zwei Teile (3a, 3b) der Kammer (3) vorgesehen ist, um den Übergang des Fluids von einem Teil zum anderen der Kammer (3) zum axialen Gleiten des Kolbens (4) in Bezug auf den Stoßdämpferkörper (2) zu ermöglichen, wobei der mindestens eine Verbindungskanal (7) in dem Kolben (4) bestimmt ist und einen kalibrierten Abschnitt (7a) davon aufweist, der an einer ersten Endfläche (4a), des Kolbens (4) bestimmt ist, wobei ein Mittel (8) zum Verändern des Durchgangsabschnitts des Verbindungskanals (7), der für das Fluid zur Verfügung steht, vorgesehen ist; wobei das Mittel (8) zum Verändern des Durchgangsabschnitts des Verbindungskanals (7), abhängig von der Richtung des axialen Gleitens des Kolbens (4) in der Kammer (3) mit der ersten Endfläche (4a) des Kolbens (4) in Eingriff bringbar oder außer Eingriff bringbar ist, um den Übergang des Fluids entlang dem kalibrierten Abschnitt (7a) zu kanalisieren, um auch den Übergang des Fluids außerhalb des kalibrierten Abschnitts (7a) zu ermöglichen, **dadurch gekennzeichnet, dass** der Verbindungskanal (7) umfasst: einen Hauptabschnitt (7b), der durch den Kolben (4) von der ersten Endfläche (4a) zu ihrer gegenüberliegenden Endfläche oder zweiten Endfläche (4b) gelangt und den kalibrierten Abschnitt (7a), der von dem Ende des Hauptabschnitts (7b), das an der ersten Endfläche (4a) des Kolbens (4) bestimmt ist, hervorsteht; wobei der kalibrierte Abschnitt (7a) durch eine Nut gebildet ist, die in der ersten Endfläche (4a) des Kolbens (4) ausgespart ist; das Mittel (8) zum Verändern des Durchgangsabschnitts des Verbindungskanals (7) ein Plättchen (14) umfasst, das der ersten Endfläche (4a) des Kolbens (4) zugewandt ist und sich axial in Bezug auf den Kolben (4) von einer aktiven Position, in der es an der ersten Endfläche (4a) des Kolbens (4) haftet, wobei es das Oberteil der Nut schließt, die den kalibrierten Abschnitt (7a) bildet, in eine inaktive Position bewegen kann, in der es von der ersten Endfläche (4a) des Kolbens (4) beabstandet ist und umgekehrt; wobei der kalibrierte Abschnitt (7a) des Verbindungskanals (7), wenn sich das Plättchen (14) in der aktiven Position befindet, mit dem Teil der Kammer (3) verbunden ist, der durch die erste Endfläche (4a) des Kolbens (4) begrenzt ist und einen Durchgangsabschnitt für das Fluid aufweist, der kleiner ist als der des Hauptabschnitts (7b).

2. Stoßdämpfer nach Anspruch 1, **dadurch gekennzeichnet, dass** das Plättchen (14) eine im Wesentlichen scheibenartige Form aufweist und koaxial zu dem Kolben (4) angeordnet ist, wobei der kalibrierte Abschnitt (7a) des Verbindungskanals (7) ein Ende davon aufweist, das in einem Bereich der ersten Endfläche (4a) des Kolbens (4) angeordnet ist, in den das Plättchen (14) nicht eingreifen kann.

3. Stoßdämpfer nach einem oder mehreren der vorhergehenden Ansprüche, **dadurch gekennzeichnet, dass** der Kolben (4) an einem Zwischenbereich der StangeStange (5) befestigt ist; wobei die Stange (5) von beiden axialen Enden der Kammer (3) hervorsteht.

4. Stoßdämpfer nach einem oder mehreren der vorhergehenden Ansprüche, **dadurch gekennzeichnet, dass** das Plättchen (14) durch eine Bohrung (25) gekreuzt wird, die verschiebbar mit einem Abschnitt der Stange (5) gekoppelt ist, der von der ersten Endfläche (4a) des Kolbens (4) hervorsteht, wobei Mittel (26) zum Begrenzen eines Verschiebens des Plättchens (14) weg von der ersten Endfläche (4) des Kolbens (4) vorgesehen sind.

5. Stoßdämpfer nach einem oder mehreren der vorhergehenden Ansprüche, **dadurch gekennzeichnet, dass** die Mittel zum Begrenzen des Verschiebens (26) des Plättchens (14) eine axiale Schulter (27) umfassen, die in einem voreingestellten Abstand von der ersten Endfläche (4a) des Kolbens (4) entlang des Abschnitts (5a) der Stange (5), der von der ersten Endfläche (4a) des Kolbens (4) hervorsteht, bestimmt ist.

6. Stoßdämpfer nach einem oder mehreren der vorhergehenden Ansprüche, **dadurch gekennzeichnet, dass** das Plättchen (14) einen kleineren Durchmesser aufweist, als der des Kolbens (4), wobei der kalibrierte Abschnitt (7a) des Verbindungskanals (7) ein Ende davon in einem Bereich der ersten Endfläche (4a) des Kolbens (4) aufweist, das in Bezug auf das Plättchen (14) überschüssig ist.

7. Stoßdämpfer nach einem oder mehreren der vorhergehenden Ansprüche, **dadurch gekennzeichnet, dass** er einen Hilfsverbindungskanal (29) umfasst, der von einer Endfläche zur anderen durch den Kolben (4) verläuft, wobei ein Ende des Hilfsverbindungskanals (29) in einer ersten Endfläche (4a) des Kolbens (4) bestimmt ist, der in der aktiven Position durch das Plättchen (14) blockiert ist.

8. Stoßdämpfer nach einem oder mehreren der vorhergehenden Ansprüche, **dadurch gekennzeichnet, dass** er Rücksetzmittel (30) umfasst, die angepasst sind, den Kolben (4) an einem axialen Ende der Kammer (3), die der zweiten Endfläche (4b) des Kolbens (4) zugewandt ist, zu halten oder zu bewegen.

9. Stoßdämpfer nach Anspruch 8, **dadurch gekennzeichnet, dass** das Rücksetzmittel (30) eine Rückstellfeder (31) umfasst, die an einem Abschnitt (5b) der Stange (5) angebracht ist, der von der Kammer (3) hervorsteht und sich zwischen einer axialen Schulter (32), die entlang der Stange (5) bestimmt ist, und einer axialen Schulter (34), die durch den Stoßdämpferkörper (2) bestimmt ist, befindet.

10. Stoßdämpfer nach einem oder mehreren der vorhergehenden Ansprüche, **dadurch gekennzeichnet, dass** der kalibrierte Abschnitt (7a) des Verbindungskanals (7) durch einen geprägten Bereich der ersten Endfläche (4a) des Kolbens (4) bestimmt ist.

11. Stoßdämpfer nach einem oder mehreren der vorhergehenden Ansprüche, **dadurch gekennzeichnet, dass** das Fluid durch eine Flüssigkeit gebildet ist.

## Revendications

1. Amortisseur de type à fluide, en particulier pour des portes d'appareils électroménagers tels que des fours, lave-vaisselle ou similaires ou pour des composants de meuble tels que des portes de placard ou des tiroirs, qui comprend un corps d'amortisseur (2) qui comporte à l'intérieur une chambre sensiblement cylindrique (3) qui reçoit de manière coaxiale un piston (4) doté d'une tige (5) qui dépasse d'au moins une extrémité axiale de ladite chambre (3) ; ledit piston (4) divisant ladite chambre (3) en deux parties (3a, 3b) agencées à des côtés mutuellement opposés par rapport audit piston (4) le long de l'axe (6) de ladite chambre (3) et contenant un fluide ; ledit piston (4) étant reçu de manière à pouvoir coulisser axialement à l'intérieur de ladite chambre (3) ; au moins un conduit (7) étant prévu pour relier lesdites deux parties (3a, 3b) de la chambre (3) afin de permettre le passage du fluide d'une partie à l'autre de ladite chambre (3) pour le coulissement axial dudit piston (4) par rapport audit corps d'amortisseur (2), ledit au moins un conduit de liaison (7) étant défini dans ledit piston (4) et comportant une partie calibrée (7a) qui est définie sur une première face frontale (4a) dudit piston (4), des moyens (8) étant prévus pour faire varier la section de passage dudit conduit de liaison (7) disponible pour le fluide ; lesdits moyens (8) pour faire varier la section de passage dudit conduit de liaison (7), en fonction de la direction de coulissement axial dudit piston (4) dans ladite chambre (3), pouvant venir en prise avec ou se libérer de ladite première face frontale (4a) du piston (4) afin de canaliser le passage du fluide le long de ladite partie calibrée (7a) ou afin de permettre également le passage du fluide hors de ladite partie calibrée (7a), **caractérisé en ce que** ledit conduit de liaison (7) comprend : une partie principale (7b), qui passe à travers ledit piston (4) de ladite première face frontale (4a) à sa face frontale opposée ou seconde face frontale (4b), et ladite partie calibrée (7a), qui dépasse de l'extrémité de ladite partie principale (7b) et qui est définie sur ladite première face frontale (4a) du piston (4) ; ladite partie calibrée (7a) étant constituée d'une rainure qui est en retrait dans ladite première face frontale (4a) du piston (4) ; lesdits moyens (8) pour faire varier la section de passage dudit conduit de liaison (7) comprenant une lame (14) qui fait face à ladite première face frontale (4a) du piston (4) et peut se déplacer axialement par rapport audit piston (4) d'une position active, dans laquelle elle adhère à ladite première face frontale (4a) du piston (4), fermant le haut de ladite rainure qui constitue ladite partie calibrée (7a), à une position inactive, dans laquelle elle est espacée de ladite première face frontale (4a) du piston (4) et vice versa ; ladite partie calibrée (7a) du conduit de liaison (7), avec ladite lame (14) dans ladite position active, étant reliée à la partie de ladite chambre (3) qui est délimitée par ladite première face frontale (4a) du piston (4) et présentant une section de passage pour le fluide qui est inférieure à celle de ladite partie principale (7b).

2. Amortisseur selon la revendication 1, **caractérisé en ce que** ladite lame (14) présente une forme essentiellement similaire à un disque et elle est agencée de manière coaxiale audit piston (4), ladite partie calibrée (7a) du conduit de liaison (7) comportant une extrémité qui est agencée dans une zone de ladite première face frontale (4a) du piston (4) qui ne peut pas être en prise avec ladite lame (14).

3. Amortisseur selon une ou plusieurs des revendications précédentes, **caractérisé en ce que** ledit piston (4) est fixé sur une zone intermédiaire de ladite tige (5) ; ladite tige (5) dépassant des deux extrémités axiales de ladite chambre (3).

4. Amortisseur selon une ou plusieurs des revendications précédentes, **caractérisé en ce que** ladite lame (14) est traversée par un trou (25) qui est couplé de manière coulissante à une partie de ladite tige (5) qui dépasse de ladite première face frontale (4a) du piston (4), des moyens (26) étant prévus pour délimiter un coulissement de ladite lame (14) dans une direction s'éloignant de ladite première face frontale (4a) du piston (4).

5. Amortisseur selon une ou plusieurs des revendications précédentes, **caractérisé en ce que** lesdits moyens pour délimiter le coulissement (26) de ladite lame (14) comprennent un épaulement axial (27) qui est défini, le long de la partie (5a) de ladite tige (5) qui dépasse de ladite première face frontale (4a) du piston (4), à une distance préréglée de ladite première face frontale (4a) du piston (4).

6. Amortisseur selon une ou plusieurs des revendications précédentes, **caractérisé en ce que** ladite lame (14) présente un diamètre inférieur à celui dudit piston (4), ladite partie calibrée (7a) du conduit de liaison (7) comportant une extrémité dans une zone de ladite première face frontale (4a) du piston (4) qui est en saillie par rapport à ladite lame (14).

7. Amortisseur selon une ou plusieurs des revendications précédentes, **caractérisé en ce qu'**il comprend un conduit de liaison auxiliaire (29) qui passe à travers ledit piston (4) d'une face frontale à l'autre, une extrémité dudit conduit de liaison auxiliaire (29) définie dans ladite première face frontale (4a) dudit piston (4) étant bloquée par ladite lame (14) dans ladite position active.

8. Amortisseur selon une ou plusieurs des revendications précédentes, **caractérisé en ce qu'**il comprend des moyens de remise à l'état initial (30) adaptés pour garder ou déplacer ledit piston (4) à l'extrémité axiale de ladite chambre (3) qui fait face à ladite seconde face frontale (4b) du piston (4).

9. Amortisseur selon la revendication 8, **caractérisé en ce que** lesdits moyens de remise à l'état initial (30) comprennent un ressort de rappel (31) qui est monté sur une partie (5b) de ladite tige (5) qui dépasse de ladite chambre (3) et est intercalé entre un épaulement axial (32) qui est défini le long de ladite tige (5) et un épaulement axial (34) qui est défini par ledit corps d'amortisseur (2).

10. Amortisseur selon une ou plusieurs des revendications précédentes, **caractérisé en ce que** ladite partie calibrée (7a) du conduit de liaison (7) est définie par une zone estampée de ladite première face frontale (4a) du piston (4).

11. Amortisseur selon une ou plusieurs des revendications précédentes, **caractérisé en ce que** ledit fluide est constitué d'un liquide.
